# FASCICULE DE BREVET EUROPEEN

(11) **EP 0 971 597 B1**
(45) Date de publication et mention de la délivrance du brevet: **23.07.2003**
(21) Numéro de dépôt: 98917276.2
(22) Date de dépôt: 31.03.1998
(51) Int. Cl.: A23C 19/032, A23L 1/314, A23C 19/06

(54) **PROCEDE DE FABRICATION D'UN PRODUIT ALIMENTAIRE FERMENTE**
VERFAHREN ZUR HERSTELLUNG EINES FERMENTIERTEN NAHRUNGSMITTELS
PROCESS FOR MANUFACTURING A FERMENTED FOOD PRODUCT

(30) Priorité: 01.04.1997 FR 9703955
(43) Date de publication de la demande: 19.01.2000
(73) Titulaire: Biosaveurs, 34000 Montpellier (FR)
(72) Inventeur: BIRGET, Marc, 94170 Le Perreux sur Marne (FR)
(74) Mandataire: Goulard, Sophie
(86) Numéro de dépôt international: FR9800649
(87) Numéro de publication internationale: WO98043488

(56) Documents cités:
- EP-A- 0 058 856
- EP-A- 0 159 303
- EP-A- 0 337 497
- FR-A- 2 368 224
- US-A- 3 295 991
- US-A- 3 975 544
- DATABASE FSTA INTERNATIONAL FOOD INFORMATION SERVICE (IFIS), FRANFURT/MAIN, DE 87-1-02-p0154, BRAUN S.: "Microencapsulated multi-enzyme systems to produce flavors and recycle cofactors" XP002050290 & DISSERTATION ABSTRACTS INTERNATIONAL B366, vol. 46, no. 2, 1985,
- CHEN C ET AL: "BESCHLEUNIGUNG DER REIFUNG VON FETTARMEM CHEDDARKAESE UNTER VERWENDUNG LYOPHILISIERTER EXTRAKTE VERSCHIEDENER MIKROBEN AUS KAESE" MILCHWISSENSCHAFT, vol. 47, no. 3, 1 janvier 1992, page 199 XP000277666

## Description

### DOMAINE DE L'INVENTION

L'invention concerne un procédé de fabrication de produits alimentaires fermentés. Plus particulièrement, elle se rapporte à l'utilisation du contenu cellulaire de micro-organismes afin de réduire la durée de la phase d'affinage et d'améliorer les qualités organoleptiques de ces produits.

### ART ANTERIEUR DE L'INVENTION

Les procédés de fabrication de produits fermentés se décomposent en deux grandes étapes :
- préparation du produit à la fermentation,
- affinage de ce produit, ou maturation, au cours duquel les constituants de la matière première sont transformés par action de facteurs physiques ou biologiques, tels que des enzymes dont certaines sont d'origine microbienne.

Cette seconde phase est souvent assez longue. Pour des raisons économiques évidentes, l'utilisation de différents moyens a déjà été envisagée pour réduire sa durée. Dans le domaine des produits laitiers, il s'agit de :
- moyens physiques : le brevet WO-A-8705470 décrit l'utilisation d'un champ magnétique pour accélérer l'affinage des fromages. Un autre brevet préconise l'augmentation de la pression ;
- moyens microbiologiques : certains brevets décrivent l'addition de micro-organismes déterminés pour diminuer la durée de l'affinage. Ainsi, le brevet EP0365173 mentionne l'utilisation d'un nouveau micro-organisme alors que les brevets SU-A-1353401 et NL-A-8700176 évoquent chacun l'addition d'un Lactobacille déterminé à la flore normale de lactocoques. Le brevet EP0304119 décrit l'utilisation d'un concentré obtenu à partir des produits de fermentation des composants du fromage par action de micro-organismes ayant une activité protéolytique, lipolytique ou peptidolytique ;
- moyens enzymatiques : certains brevets décrivent l'addition d'une enzyme telle qu'une protéase (EP0246163), une protéase de fruit (JP-A-062661682), une lipase extraite d'une souche d'Aspergillus (EP0167309) ;
- combinaisons de moyens : certains procédés envisagent l'addition à la matière première d'une enzyme et d'un micro-organisme pour accélérer l'affinage. Le brevet CA2072159 décrit l'utilisation d'une neutrase et d'un Lactobacille chauffé alors que le brevet EP469857 mentionne l'addition d'un Lactobacille et d'une lipase ou d'une protéase.

Le procédé décrit dans le brevet EP0337497 concerne la fabrication de produits fermentés et permet d'accélérer la maturation de ces produits par adjonction à la masse de matière première d'extraits des cellules d'un ou de plusieurs micro-organismes usuels.

Cependant, aucune proportion, aucune indication sur le nombre de types différents de micro-organismes composant la solution ajoutée à la matière première ne sont données. En outre, les exemples, et plus particulièrement l'exemple 2, soulignent que ce procédé favorise le développement d'un ou de plusieurs arômes mais ne traitent pas du processus d'affinage dans son ensemble.

La description du procédé faite dans cette demande de brevet n'indique donc aucun moyen technique susceptible de résoudre un problème de manière reproductible.

L'invention décrite dans le brevet EP0058856 concerne un procédé pour la fabrication de produits alimentaires aromatisés permettant de réduire le temps de maturation de ces produits.

Selon cette invention, l'aromatisation et l'accélération du processus de maturation sont engendrées par l'adjonction à la matière première d'une masse déjà fermentée et non de facteurs directs de l'affinage. Cette masse est obtenue en ajoutant des complexes enzymatiques isolés, provenant de cultures pures ou mixtes de micro-organismes usuels, à une fraction de la matière à aromatiser. L'accélération de l'affinage repose donc sur le traitement spécial appliqué à cette fraction.

Le brevet FR2368224 revendique l'utilisation d'une protéase purifiée extraite d'une moisissure et d'un autolysat des cellules d'une bactérie lactique comme source d'enzyme protéolytique.

Enfin, les brevets US3295991 et EP0159303 décrivent l'addition au lait après traitement d'un extrait de micro-organismes habituellement utilisés dans la fabrication du fromage. Ces extraits comportent une ou plusieurs enzymes. La lecture de ces deux textes montre que :
- ces inventions se rapportent à l'addition d'extraits n'ayant qu'une action protéolytique,
- l'extrait mentionné est toujours produit à partir d'un nombre très limité de souches différentes de micro-organismes, lesquelles appartiennent au groupe des bactéries lactiques.

Il ressort donc de l'étude de l'art antérieur que :
- de nombreuses solutions ont été envisagées pour accélérer la maturation de produits fermentés ;
- celles-ci utilisent différents moyens;
- si le moyen est microbiologique, le ou exceptionnellement les micro-organismes utilisés sont presque exclusivement des bactéries lactiques;
- si le moyen est enzymatique, il se rapporte à une seule famille d'enzyme laquelle est presque toujours celle des protéases; en outre, lorsque l'enzyme provient d'un micro-organisme, cet extrait est partiellement ou totalement purifié.

Dans le domaine des produits de salaison sèche, les procédés utilisés restent traditionnels et l'accélération de l'affinage n'a pas fait l'objet d'études conséquentes.

Jusqu'à présent, les solutions proposées pour réduire la phase d'affinage d'un produit fermenté utilisant des micro-organismes ou leurs enzymes visent donc presque uniquement à favoriser les processus biochimiques engendrés par les bactéries lactiques.

D'autre part, si les solutions de l'art antérieur présentent une certaine efficacité quant à la réduction de la phase d'affinage, elles fournissent encore trop souvent un produit final dont les qualités organoleptiques ne sont pas satisfaisantes. En effet, quel que soit le procédé d'accélération utilisé, le produit obtenu présente généralement une atténuation des saveurs et de l'onctuosité de la pâte due à l'atténuation de la protéolyse et de la lipolyse. Pour compenser ce phénomène, on tend à modifier la technologie en augmentant la teneur en matière grasse et en pratiquant un délactosage au cours de l'égouttage. La qualité du produit final est toutefois souvent très variable.

Il faut enfin noter que les conditions de fabrication (pH, température, durée de certaines phases, addition de composés, ...) d'un produit alimentaire fermenté donné sont très strictes. Les réactions biochimiques se produisant pendant la maturation sont nombreuses, complexes, en chaîne. Leur combinaison est mal connue et l'intervention d'un nouveau facteur, même d'apparence simple, dans un procédé d'affinage a toujours des conséquences difficiles à présumer.

### OBJET DE L'INVENTION

La présente invention a pour objet par rapport à l'art antérieur de réduire toujours plus la phase d'affinage de produits alimentaires fermentés et d'en améliorer les qualités organoleptiques.

### DESCRIPTION DE L'INVENTION

La présente invention concerne un mode de préparation et d'utilisation du contenu cellulaire d'un bouquet complet de micro-organismes d'affinage de produits alimentaires fermentés.

Elle concerne plus particulièrement un procédé perfectionné de fabrication de produits alimentaires fermentés tels que des fromages ou des produits de salaison sèche par addition du contenu cellulaire de ce bouquet aux composants de la matière première.

Dans un procédé usuel de fabrication de produits fermentés, la matière première est soumise à différents traitements avant que le produit ne soit stocké pour affinage.

Pour un produit laitier, après la standardisation et si nécessaire la thermisation du lait, on effectue entre autres :
- la coagulation ou précipitation du caillé : elle est obtenue par addition d'enzymes (présure) ou par acidification de la matière première; elle peut aussi être combinée (présure et composés acidifiants). A ce stade du procédé, selon le produit final souhaité et les conditions opératoires définies, on ajoute éventuellement des flores technologiques (ferments lactiques et/ou flore microbienne d'affinage dite flore secondaire),
- l'égouttage : il sépare le lactosérum du coagulum afin d'amener ce dernier à une teneur définie en eau et d'en régler la minéralisation ; au début de cette phase peuvent être pratiqués le découpage et le lavage, le brassage ou encore le pressage, le lavage et le moulage selon le produit final souhaité,
- le salage : il agit sur l'eau liée par changement des liaisons de l'eau au substrat ; ainsi, il complète l'égouttage, agit sur le développement des micro-organismes et influence par conséquent l'affinage et contribue au goût au fromage,
- l'affinage : il correspond à la digestion enzymatique du caillé obtenue par des transformations biochimiques donnant au fromage des caractères nouveaux ; les enzymes sont les agents de l'affinage et ont diverses origines (lait, présure ou substitut, les micro-organismes du lait, des levains, de l'atmosphère etc.).

Il faut noter que les procédés habituels de fabrication des produits laitiers ne comportent pas systématiquement l'addition d'une flore technologique. En effet, certains modes opératoires sont tels que les micro-organismes présents naturellement dans le lait ou les contaminants provenant de l'environnement dans lequel ce lait est recueilli, traité etc. suffisent pour assurer la transformation souhaitée des composés de la matière première. L'absence d'ensemencement avec une quelconque flore lactique ou d'affinage ne signifie donc pas que le fromage soit fabriqué sans intervention de cette flore mais que cette dernière soit naturellement présente dans la matière première.

Pour un produit de salaison sèche, on réalise principalement :
- la découpe de la viande,
- l'adjonction des additifs et des flores technologiques,
- l'embossage,
- l'étuvage,
- le stockage pour affinage.

Ces procédés connus ont en commun l'utilisation (présence naturelle ou ensemencement) d'une flore d'affinage constituée d'un mélange de différents micro-organismes (bactéries, levures et/ou moisissures) dont la nature et la proportion sont fonction du produit final souhaité. Cette flore sert à transformer les composants de la matière première et à conférer au produit final ses caractéristiques de goût, de texture ... La quantité de cellules ainsi ajoutée est généralement comprise entre environ 10² et 10⁵ par millilitre de lait ou gramme de viande selon la nature de l'espèce. Cette quantité est inférieure à celle des organismes vivants intervenant dans le mécanisme d'affinage. En effet, la concentration des bactéries, levures et moisissures évolue dans le temps en raison de leur multiplication. L'importance de ce développement varie en fonction du micro-organisme considéré, des conditions dans lesquelles la matière première traitée est conservée etc.

L'invention consiste à ajouter aux composants de cette matière première un bouquet d'extraits cellulaires tirés d'un bouquet de micro-organismes dont la composition et les proportions sont globalement calquées sur celles de la flore d'affinage, naturelle ou apportée par ensemencement, pour un produit donné.

Le mélange des extraits de ces multiples micro-organismes contient principalement des protéases, peptidases, lipases et estérases, enzymes servant à catalyser les réactions mal connues mais nécessaires à la maturation des produits c'est-à-dire leur conférant leurs caractéristiques de goût, d'aspect, de texture...

On définit un équivalent cellule comme la totalité des constituants de cette cellule (contenu cellulaire et fragments de membrane) après sa lyse. Selon la présente invention, le nombre d'équivalents cellules formant le bouquet ajouté est supérieur d'environ 10 à 1000 fois au nombre de cellules constituant la flore bactérienne d'affinage ensemençant normalement la matière première. Le bouquet d'extraits cellulaires assure donc l'apport de 5.10⁴ à 10⁸ équivalents cellules par millilitre de lait ou gramme de viande.

Le mode de préparation du bouquet d'extraits de micro-organismes comprend les étapes de :
- préparation de la biomasse ;
- concentration optionnelle de celle-ci;
- lyse cellulaire ;
- mélange des extraits obtenus.

La préparation du matériel vivant se fait par fermentation traditionnelle menée de manière à obtenir une biomasse d'environ 10⁹ ufc/ml pour les bactéries et 10⁷ ufc/ml pour les levures et les moisissures. Les micro-organismes utilisés dans ce procédé sont les suivants :
Bactéries GRAM+ :
   Famille des Corynebacteriaceae :
      - genre Corynebacterium, de l'espèce C.glutamicum
      - genre Brevibacterium, de l'espèce B.linens
      - genre Arthrobacter, de l'espèce A.globiformis
      - genre Propionobacterium
   Famille des Micrococaceae :
      - genre Micrococcus
      - genre Staphylococcus, des espèces S.xylosus et S.carnosus
Bactéries GRAM- :
   Famille des Enterobacteriaceae :
   - genre Hafnia, de l'espèce H.alveï
   - genre Enterococcus, des espèces E.faecalis ou E.faecium
Levures :
   - genre Debaryomyces, de l'espèce D.hansenii
   - genre Saccharomyces, de l'espèce S.cerevisiae
   - genre Kluyveromyces, de l'espèce K.lactis
   - genre Geotrichum, de l'espèce G.candidum
Moisissures:
   Famille des champignons filamenteux :
   - genre Penicillium, des espèces P.candidum, P.chrysogenum, P.Roquefortii et P.nalgiovensis

Le développement de chaque souche utilisée est réalisé isolément. Toutefois, certains micro-organismes apparentés peuvent être cultivés dans le même fermenteur.

La concentration de la biomasse est une étape optionnelle. Elle est effectuée par centrifugation, filtration tangentielle ou tout autre mode connu de la technique.

La lyse cellulaire est réalisée par des moyens connus tels que l'irradiation, le traitement thermique, la lyophilisation, les ultra hautes pressions, le choc osmotique, les ultrasons, les variations de pH, le broyage, le traitement enzymatique ... Elle permet de recueillir les enzymes des bactéries, des levures ou des moisissures. Elle est choisie de manière à limiter au maximum la dénaturation de ces catalyseurs biologiques.

Le mélange des extraits d'origine différente, c'est à dire provenant de chaque micro-organisme cultivé, est réalisé selon des procédés connus. A ce stade du traitement, il se présente sous forme de suspension.

Selon une variante de réalisation, ce mélange est séché, congelé ou traité par tout procédé connu de la technique lui conférant une forme solide adaptée à la conservation.

La particularité de ce bouquet est donc qu'il comporte un nombre relativement grand d'enzymes. Celles-ci possèdent chacune une fonction déterminée (transformation des protéines, hydrolyse des peptides, modification des lipides et libération d'un grand nombre de composés dont certains ont un rôle important sur la texture et la flaveur des produits). Leur action et celle des enzymes des micro-organismes d'affinage naturellement présents ou incorporés se cumulent.

Ce bouquet d'extraits de micro-organismes constitue donc un facteur complexe de modification du processus d'affinage. On constate toutefois qu'il assure la réalisation de l'ensemble des réactions de catalyse nécessaires à une bonne maturation tout en respectant les mécanismes de la fermentation permettant d'obtenir un produit final de qualité supérieure à celle d'un produit obtenu par un procédé classique. Des analyses permettant d'établir une appréciation tant objective, par des méthodes instrumentales (mesure de la concentration en acides organiques), que subjective, par l'épreuve des différences établies par un jury d'experts, montrent que cette addition d'un bouquet d'extraits de micro-organismes permet également d'améliorer les qualités organoleptiques du produit final. A durée égale d'affinage, les produits fabriqués selon le procédé de la présente invention comparés à ceux obtenus par procédé usuel présentent un contenu non perturbé en acides organiques et sont jugés meilleurs (note afférente au goût plus élevée).

Pour un produit donné, l'addition à sa matière première d'un mélange constitué des extraits de tout ou partie des micro-organismes intervenant dans sa maturation naturelle a donc pour effet d'accélérer son affinage et d'améliorer ses qualités organoleptiques.

Le mode d'utilisation préféré consiste en l'addition du bouquet d'extraits ainsi obtenu au lait avant coagulation lors de l'intoduction de presure ou de composés acidifiants ou à la mêlée de viande avant embossage. La quantité d'extrait ajouté dépend de son mode de préparation. Pour des cultures produisant les concentrations énoncées précédemment (10⁹ pour les bactéries, 10⁷ pour les levures et les moisissures), elle est d'environ 1/10000 du volume (pour le lait) ou de la masse (pour la viande) de la matière première si la biomasse a subi des étapes de concentration et de mise en solution saline. Elle est de 1% dans le cas contraire.

Selon une variante, le bouquet d'extraits de micro-organismes est incorporé à la matière première lors de son prétraitement c'est-à-dire 12 à 24 heures avant le début de la fabrication.

Selon une autre variante, cette addition est effectuée lors d'une phase ultérieure du procédé de fabrication avant le commencement de la maturation.

Le tableau 1 répertorie par famille de produit alimentaire fermenté le bouquet préféré de micro-organismes et le nombre de cellules dont l'extrait est incorporé à 1 millilitre de lait ou 1 gramme de viande.

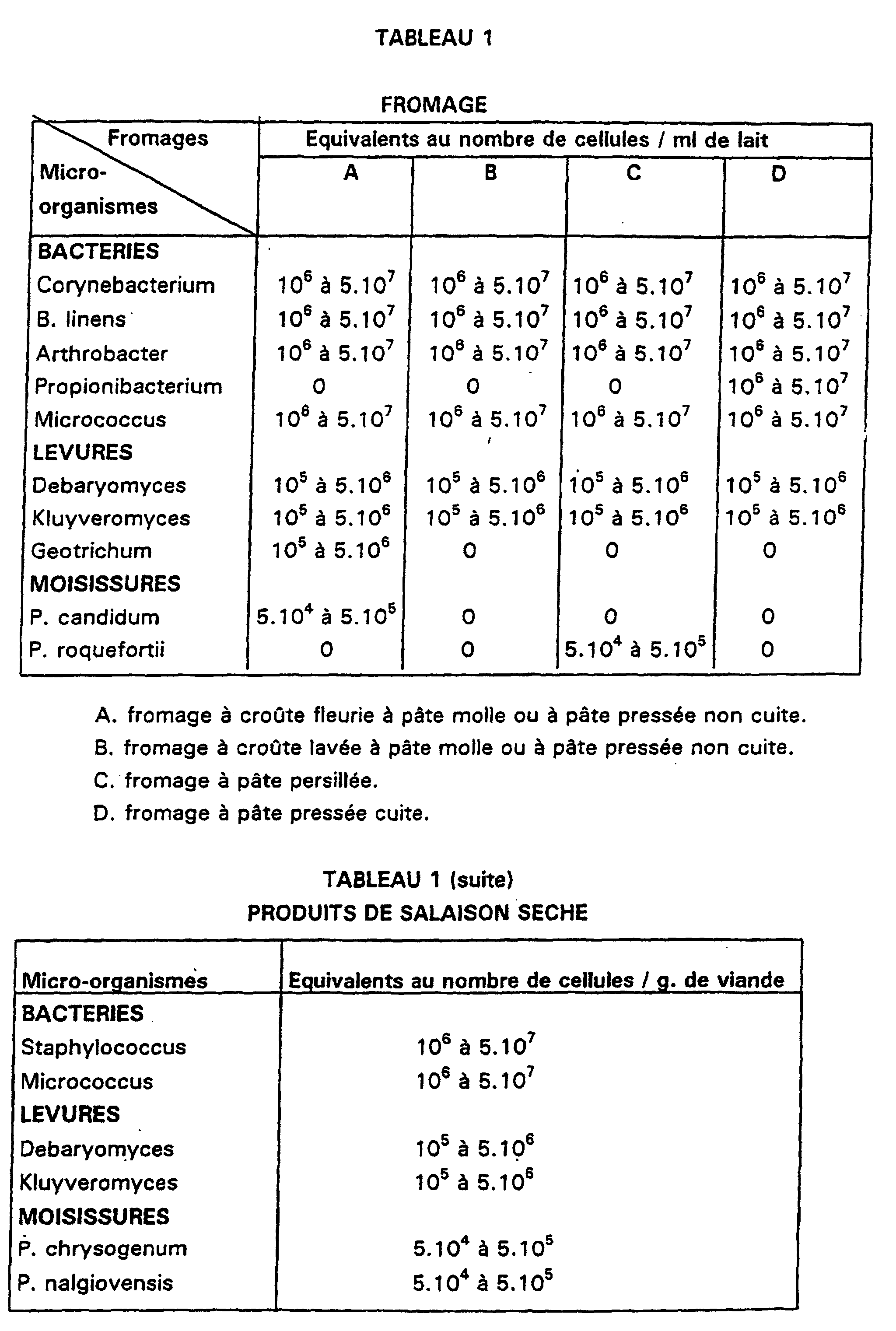

Selon une variante, l'addition de ce bouquet d'extraits cellulaires peut être accompagnée d'un ou de plusieurs des facteurs d'affinage constitués par des enzymes, des bactéries lactiques, leur extrait cellulaire et un bouquet de leurs extraits cellulaires ou encore de tout autre traitement compatible visant à améliorer le procédé de fabrication du produit fermenté.

Selon une autre variante de réalisation, le bouquet des extraits de micro-organismes n'est ajouté, en excès par rapport aux proportions mentionnées précédemment, qu'à une fraction de la matière première. Le volume de cette fraction est compris entre environ 5 et 50% du volume ou de la masse de la matière première. Après une maturation accélérée due à l'importance de la concentration des extraits cellulaires, cette fraction est elle-même adjointe au reste de la matière première. Le mélange de ces deux parties se fait à tout moment dans la mesure où elles présentent des consistances permettant d'assurer l'homogénéité dudit mélange. L'addition de cette fraction affinée de manière accélérée assure principalement un apport aromatique.

### EXEMPLES DE REALISATION

### I - On réalise un fromage de type Edam selon la présente invention.

### I.1 Choix des micro-organismes.

Les micro-organismes dont on utilise l'extrait dans cette réalisation sont :
- le Geotrichum
- le B. linens
- l'A.globiformis

### I.2 Culture des micro-organismes.

Le Geotrichum est mis en culture dans un milieu composé de phosphate monopotassique, sulfate de magnésium, dextrose, extrait de levure, acide lactique et eau permutée.

Le pH initial de cette solution est compris entre 4 et 4,5.

L'incubation se fait à 25°C. Elle est aérobie et dure 36 à 48 heures.

La concentration finale du bouillon en Geotrichum est d'environ 10⁷/ml.

Le B.linens et l'A.globiformis sont mis en culture dans des milieux distincts composés de sulfate de magnésium, chlorure de sodium, acide ascorbique, extrait de levure, peptone de caséine, Tween 80, lactose, lait écrémé et eau permutée.

Le pH initial de ces bouillons est ajusté à 7 avec de l'acide.

L'incubation se fait à 25°C. Elle est aérobie et dure de 15 à 24 heures.

La concentration finale des bouillons en B. linens ou A.globiformis est d'environ 10⁹/ml.

### I.3 Concentration de la biomasse.

Elle est réalisée par centrifugation selon un procédé connu.

### I.4 Lyse cellulaire.

Elle est effectuée par choc osmotique en plaçant un gramme de chaque culture dans 10 ml d'une solution à 20% de chlorure de sodium (NaCl). Avant le début de la lyse, une numération cellulaire montre que la concentration des micro-organismes dans leur solution respective est d'environ :
- Geotrichum 10⁸/ml
- B.linens 10¹⁰/ml
- A.globiformis 10¹⁰/ml

### 1.5 Addition de l'extrait cellulaire du bouquet de micro-organismes.

Le lait standardisé en matières grasses est placé dans une cuve de 500 litres. Il est traité thermiquement : chauffé à 72°C pendant 20 secondes.

On ajoute ensuite au lait ainsi traité les auxiliaires technologiques usuels :
- les ferments lactiques,
- le coagulant,
- du chlorure de calcium,
ainsi que le bouquet d'extraits cellulaires selon la présente invention.

Les micro-organismes d'affinage sont naturellement présents dans la matière première qui ne fait donc pas l'objet d'un ensemencement. Le bouquet d'extraits cellulaire est réalisé en mélangeant :
- 5 volumes de solution d'extrait de Geotrichum (11%)
- 15 volumes de solution d'extrait de B.linens (33%)
- 25 volumes de solution d'extrait de A.globiformis (56%).

Le tableau 2 reprend les éléments quantitatifs de cette opération.

**TABLEAU 2**

| **Micro-organismes** | **Nombre d'équivalents cellules ajouté/ ml de lait** | **Quantité de solution introduite dans 500 l de lait** |
|---|---|---|
| Geotrichum | 10⁴ | 50 ml |
| B. linens | 3.10⁶ | 150 ml |
| A. globiformis | 5.10⁶ | 250 ml |
| | | |
| mélange | 8.10⁶ | 450 ml |

On ajoute 450 ml du mélange d'extraits des trois micro-organismes aux 500 litres de lait de la cuve.

L'ensemble des additifs et le lait sont mélangés de manière à obtenir un produit homogène lequel est ensuite traité selon le procédé usuel.

### I.6 Affinage du produit.

Ce type de fromage est habituellement affiné pendant une durée allant de 7 semaines à 16 mois selon la qualité de produit souhaitée avant d'obtenir des qualités organoleptiques satisfaisantes.

Dans les tests fromagers réalisés, les fromages sont affinés à 15°C pendant une durée allant de 3 à 7 semaines.

Lors de ces tests, on a effectué des mesures du degré de protéolyse (tableau 3) ainsi que des dégustations pour évaluer la texture et le goût des produits.

Les résultats de ces tests montrent que :
- le procédé reste contrôlable et maîtrisé, contrairement aux expériences consistant à ajouter des enzymes pures ;
- le contenu des acides organiques n'est pas perturbé au bout de 7 semaines, ce résultat démontrant le déroulement normal du processus d'affinage;
- les résultats à 3 et 5 semaines des meilleurs essais correspondent respectivement à ceux des témoins à 5 et 7 semaines ;
- l'analyse de l'ensemble des résultats permet d'estimer un gain de temps d'environ 30% de la durée d'affinage.

**TABLEAU 3**

| **Micro-organismes** | **Protéolyse (mmol/Kg)** | | |
|---|---|---|---|
| | **3 semaines** | **5 semaines** | **7 semaines** |
| Geotrichum | 90 | 120 | 166 |
| B. linens | 73 | 107 | 130 |
| A. globiformis | 73 | 100 | 128 |
| Mélange | 78 | 98 | 143 |
| Témoin | 69 | 97 | 136 |

### Il - On réalise une saucisse fermentée séchée selon la présente invention.

### II.1 Choix des micro-organismes.

Les micro-organismes dont on utilise l'extrait dans cette réalisation sont :
- le Micrococcus,
- le Staphylococcus,
- le Penicillium.

### II.2 Culture des micro-organismes.

Le Micrococcus et le Staphylococcus sont mis en culture dans des milieux distincts composés de lactose, peptone de caséine, extrait de levure, peptone de viande, chlorure de sodium, sulfate de magnésium et eau permutée.

Le pH est maintenu à 6.

L'incubation se fait à 30°C et dure 24 heures.

La concentration finale du bouillon en Micrococcus ou en Staphylococcus et de 10⁹/ml.

Le Penicillium est mis en culture dans un milieu composé de glucose, chlorure de calcium, phosphate de potassium, nitrate de potassium, extrait de levure, glutamate de sodium, sulfate de manganèse et eau permutée.

Le pH initial de cette solution est 5.

L'incubation se fait à 21°C et dure de 3 à 5 jours en aérobiose.

La concentration finale du bouillon en Pénicillium est d'environ 10⁷/ml.

### II.3 Concentration de la biomasse.

Elle est réalisée par centrifugation selon un procédé connu.

### II.4 Lyse cellulaire.

Elle est effectuée par choc osmotique en plaçant un gramme de chaque culture dans 10 ml de solution à 20% de chlorure de sodium (NaCl). Avant le début de la lyse, une numération cellulaire montre que la concentration des micro-organismes dans leur solution respective est d'environ:
- Micrococcus 10¹⁰/ml,
- Staphylococcus 10¹⁰/ml,
- Penicillium 10⁸/ml.

### II.5 Addition de l'extrait cellulaire du bouquet de micro-organismes.

On prépare 100 Kg de viande dans un cutter.

On ajoute ensuite à la mêlée ainsi obtenue les auxiliaires et additifs usuels :
- les ferments d'acidification,
- les ferments de maturation,
- les sucres,
- les épices
ainsi que le bouquet d'extraits cellulaires selon la présente invention. Ce dernier est réalisé en mélangeant :
- 1 volume de solution d'extrait de Micrococcus (33,3%),
- 1 volume de solution d'extrait de Staphylococcus (33,3%),
- 1 volume de solution d'extrait de Penicillium (33,3%).

Le tableau 4 reprend les éléments quantitatifs de cette opération.

**TABLEAU 4**

| **Micro-organismes** | **Nombre d'équivalents cellules ajouté/ g de viande** | **Quantité de solution introduite dans 100 Kg de mêlée** |
|---|---|---|
| Micrococcus | 10⁶ | 10 ml |
| Staphylococcus | 10⁶ | 10 ml |
| Penicillium | 10⁴ | 10 ml |
| mélange | 2.10⁶ | 30 ml |

On ajoute 30 ml du mélange d'extraits des trois micro-organismes aux 100 Kg de mêlée.

L'ensemble des additifs et la mêlée sont mélangés de manière à obtenir un produit homogène lequel est ensuite traité selon le procédé habituel.

### II.6 Affinage du produit.

Ce type de saucisse sèche est habituellement étuvé de 3 à 15 jours à des températures variant entre 19 et 23°C. Il est ensuite séché pendant 3 à 4 semaines à 13°C environ.

Dans les tests réalisés, les saucisses sèches sont étuvées 6 jours à 21°C puis séchées pendant une durée allant de 2 à 4 semaines.

Lors de ces essais, des dégustations ont été réalisées afin d'évaluer le goût et la texture des produits. Les résultats de ces tests sont les suivants :
- les paramètres habituels de suivi de production (perte d'eau, etc.) montrent un déroulement normal du processus de maturation,
- les résultats à deux et trois semaines des meilleurs essais correspondent respectivement à ceux des témoins à 3 et 4 semaines,
- l'analyse de l'ensemble des résultats permet d'estimer un gain de temps de 20 à 30% de la durée de maturation.

## Revendications

1. Procédé de fabrication d'un produit alimentaire fermenté, **caractérisé par** l'addition à la matière première d'un bouquet d'extraits cellulaires de ses micro-organismes d'affinage, ceux-ci étant naturellement présents ou apportés par ensemencement étant précisé que :
- le nombre de cellules composant le volume d'extrait d'un micro-organisme contenu dans ce bouquet est de 10 à 1000 fois supérieur à celui du même micro-organisme naturellement présent ou ajouté sous forme vivante,
- la proportion dans le bouquet de chaque extrait est environ celle du micro-organisme correspondant dans le mélange d'affinage.

2. Procédé de fabrication d'un produit alimentaire fermenté selon la revendication 1, **caractérisé en ce que** les extraits sont obtenus à partir des micro-organismes choisis parmi :
Bactéries GRAM + :
Famille des Corynebacteriaceae :
- genre Corynebacterium, de l'espèce C.glutamicum
- genre Brevibacterium, de l'espèce B.linens
- genre Arthrobacter, de l'espèce A.globiformis
- genre Propionibacterium
Famille des Micrococaceae :
- genre Micrococcus
- genre Staphylococcus, des espèces S.xylosus et S.carnosus
Bactéries GRAM- :
Famille des Enterobacteriaceae :
- genre Hafnia, de l'espèce H.alveï
- genre Enterococcus, des espèces E.faecalis ou E.faecium
Levures :
- genre Debaryomyces, de l'espèce D.hansenii
- genre Saccharomyces, de l'espèce S.cerevisiae
- genre Kluyveromyces, de l'espèce K.lactis
- genre Geotrichum, de l'espèce G.candidum
Moisissures:
Famille des champignons filamenteux :
- genre Penicillium, des espèces P.candidum, P.chrysogenum, P.roquefortii et P.nalgiovensis

3. Fromage à croûte fleurie à pâte molle ou pressée non cuite obtenu selon le procédé de la revendication 1, **caractérisé en ce que** l'addition du bouquet d'extraits cellulaires des micro-organismes d'affinage correspond à l'apport, par millilitre de lait, du contenu de :
pour les bactéries,
- 10⁶ à 5.10⁷ cellules de Corynebacterium,
- 10⁶ à 5.10⁷ cellules de B.linens,
- 10⁶ à 5.10⁷ cellules d'Arthrobacter,
- 10⁶ à 5.10⁷ cellules de Micrococcus,
pour les levures,
- 10⁵ à 5.10⁶ cellules de Debaryomyces,
- 10⁵ à 5.10⁶ cellules de Kluyveromyces,
- 10⁵ à 5.10⁶ cellules de Geotrichum
et pour les moisissures,
- 5.10⁴ à 5.10⁵ cellules de P.candidum
ou de tout micro-organisme présentant une activité similaire à celle de l'une de ces bactéries, levures et moisissures.

4. Fromage à pâte molle ou pressée non cuite à croûte lavée obtenu selon le procédé de la revendication 1, **caractérisé en ce que** l'addition du bouquet d'extraits cellulaires des micro-organismes d'affinage correspond à l'apport, par millilitre de lait, du contenu de :
pour les bactéries,
- 10⁶ à 5.10⁷ cellules de Corynebacterium,
- 10⁶ à 5.10⁷ cellules de B.linens,
- 10⁶ à 5.10⁷ cellules d'Arthrobacter,
- 10⁶ à 5.10⁷ cellules de Micrococcus,
et pour les levures,
- 10⁵ à 5.10⁶ cellules de Debaryomyces,
- 10⁵ à 5.10⁶ cellules de Kluyveromyces,
ou de tout micro-organisme présentant une activité similaire à celle de l'une de ces bactéries et levures.

5. Fromage à pâte persillée obtenu selon le procédé de la revendication 1, **caractérisé en ce que** l'addition du bouquet d'extraits cellulaires des micro-organismes d'affinage correspond à l'apport, par millilitre de lait, du contenu de :
pour les bactéries,
- 10⁶ à 5.10⁷ cellules de Corynebacterium,
- 10⁶ à 5.10⁷ cellules de B.linens,
- 10⁶ à 5.10⁷ cellules d'Arthrobacter,
- 10⁶ à 5.10⁷ cellules de Micrococcus,
pour les levures,
- 10⁵ à 5.10⁶ cellules de Debaryomyces,
- 10⁵ à 5.10⁶ cellules de Kluyveromyces
et pour les moisissures,
- 5.10⁴ à 5.10⁵ cellules de P.roquefortii
ou de tout micro-organisme présentant une activité similaire à celle de l'une de ces bactéries, levures et moisissures.

6. Fromage à pâte pressée cuite obtenu selon le procédé de la revendication 1, **caractérisé en ce que** l'addition du bouquet d'extraits cellulaires des micro-organismes d'affinage correspond à l'apport, par millilitre de lait, du contenu de :
pour les bactéries,
- 10⁶ à 5.10⁷ cellules de Corynebacterium,
- 10⁶ à 5.10⁷ cellules de B.linens,
- 10⁶ à 5.10⁷ cellules d'Arthrobacter,
- 10⁶ à 5.10⁷ cellules de Micrococcus,
- 10⁶ à 5.10⁷ cellules de Propionibacterium
et pour les levures,
- 10⁵ à 5.10⁶ cellules de Debaryomyces,
- 10⁵ à 5.10⁶ cellules de Kluyveromyces
ou de tout micro-organisme présentant une activité similaire à celle de l'une de ces bactéries et levures.

7. Produit de salaison sèche obtenu selon le procédé de la revendication 1, **caractérisé en ce que** l'addition du bouquet d'extraits cellulaires des micro-organismes d'affinage correspond à l'apport, par gramme de viande, du contenu de :
pour les bactéries,
- 10⁶ à 5.10⁷ cellules de Staphylococcus,
- 10⁶ à 5.10⁷ cellules de Micrococcus,
pour les levures,
- 10⁵ à 5.10⁶ cellules de Debaryomyces,
- 10⁵ à 5.10⁶ cellules de Kluyveromyces
et pour les moisissures,
- 5.10⁴ à 5.10⁵ cellules de P.chrysogenum,
- 5.10⁴ à 5.10⁵ cellules de P.nalgiovensis,
ou de tout micro-organisme présentant une activité similaire à celle de l'une de ces bactéries, levures et moisissures.

8. Procédé de fabrication d'un produit alimentaire fermenté selon la revendication 1, **caractérisé en ce que** le bouquet d'extraits cellulaires des micro-organismes d'affinage n'est introduit en excès que dans une fraction, c'est-à-dire 5 à 50% du volume de la matière première, cette fraction étant ensuite, après affinage accéléré, réintroduite dans le reste de matière première pour constituer un apport aromatique.

9. Procédé de fabrication d'un produit laitier fermenté selon la revendication 1, **caractérisé en outre par** l'addition à la matière première d'un ou de plusieurs des facteurs d'affinage constitués par des enzymes, des bactéries lactiques, leur extrait cellulaire et un bouquet de leurs extraits cellulaires.

## Patentansprüche

1. Verfahren zur Herstellung eines fermentierten Nahrungsmittels **gekennzeichnet durch** Hinzufügen zu dem Ausgangsmaterial
einer Gruppe von Zellextrakten seiner Reifungsmikroorganismen, die natürlicherweise vorhanden sind oder zur Ansiedelung zugegeben werden, in dem:
- die Zahl der Zellen, die das Volumen des Extraktes eines Mikroorganismus bilden, der in der Gruppe enthalten ist, 10 bis 1000 Mal größer ist als die Zahl der Zellen des Mikroorganismus, der natürlicherweise vorhanden ist oder in lebendiger Form hinzugefügt wird,
- das Verhältnis in der Gruppe jedes Extraktes ungefähr jenem des entsprechenden Mikroorganismus in der Reifungsmischung beträgt.

2. Verfahren zur Herstellung eines fermentierten Nahrungsmittels gemäß Anspruch 1, **dadurch gekennzeichnet, dass** die Extrakte erhalten werden von Mikroorganismen ausgewählt aus:
GRAM+ Bakterien:
Familie der Corynebacteriaceae:
- Gattung Corynebacterium, der Spezies C. glutamicum
- Gattung Brevibacterium, der Spezies B. linens
- Gattung Arthrobacter, der Spezies A. globiformis
- Gattung Propionibacterium
Familie der Micrococaceae:
- Gattung Micrococcus
- Gattung Staphylococcus, der Spezies S. xylosus und S. carnosus
GRAM- Bakterien:
Familie der Enterobacteriaceae:
- Gattung Hafnia, der Spezies H.alveï
- Gattung Enterococcus, der Spezies E. faecalis oder E. faecium
Hefen:
- Gattung Debaryomyces, der Spezies D. hansenii
- Gattung Saccharomyces, der Spezies S. cerevisiae
- Gattung Kluyveromyces, der Spezies K. lactis
- Gattung Geotrichum, der Spezies G. candidum
Schimmelpilze:
Familie der filamentösen Pilze
- Gattung Penicillium, der Spezies P. candidum, P. chrysogenum, P. roquefortii und P. nalgiovensis.

3. Käse mit Rindenschimmel aus weicher Masse oder ohne Kochen gepresst, erhalten nach dem Verfahren gemäß Anspruch 1, **dadurch gekennzeichnet, dass** das Hinzufügen der Gruppe von Zellextrakten der Reifungsmikroorganismen einem Beitrag entspricht, pro Milliliter Milch, des Gehalts an:
den Bakterien,
- 10⁶ bis 5x10⁷ Zellen von Corynebacterium,
- 10⁶ bis 5x10⁷ Zellen von B. linens,
- 10⁶ bis 5x10⁷ Zellen von Arthrobacter,
- 10⁶ bis 5x10⁷ Zellen von Micrococcus, den Hefen,
- 10⁵ bis 5x10⁶ Zellen von
Debaryomyces,
- 10⁵ bis 5x10⁶ Zellen von Klyveromyces,
- 10⁵ bis 5x10⁶ Zellen von Geotrichum,
und den Schimmelpilzen,
- 5x10⁴ bis 5x10⁵ Zellen von P. candidum
oder jedes Mikroorganismus, der eine vergleichbare Aktivität wie eine/s/r dieser Bakterien, Hefen und Schimmelpilze besitzt.

4. Käse aus weicher Masse oder ohne Kochen gepresst mit gewaschener Rinde, erhalten nach dem Verfahren gemäß Anspruch 1, **dadurch gekennzeichnet, dass** das Hinzufügen der Gruppe von Zellextrakten der Reifungsmikroorganismen einem Beitrag entspricht, pro Milliliter Milch, des Gehalts an:
den Bakterien,
- 10⁶ bis 5x10⁷ Zellen von Corynebacterium,
- 10⁶ bis 5x10⁷ Zellen von B. linens,
- 10⁶ bis 5x10⁷ Zellen von Arthrobacter,
- 10⁶ bis 5x10⁷ Zellen von Micrococcus, und den Hefen,
- 10⁵ bis 5x10⁶ Zellen von Debaryomyces,
- 10⁵ bis 5x10⁶ Zellen von Klyveromyces,
oder jedes Mikroorganismus, der eine vergleichbare Aktivität wie eine/s dieser Bakterien und Hefen besitzt.

5. Käse aus grünfleckiger Masse, erhalten nach dem Verfahren gemäß Anspruch 1, **dadurch gekennzeichnet, dass** das Hinzufügen der Gruppe von Zellextrakten der Reifungsmikroorganismen einem Beitrag entspricht, pro Milliliter Milch, des Gehalts an:
den Bakterien,
- 10⁶ bis 5x10⁷ Zellen von Corynebacterium,
- 10⁶ bis 5x10⁷ Zellen von B. linens,
- 10⁶ bis 5x10⁷ Zellen von Arthrobacter,
- 10⁶ bis 5x10⁷ Zellen von Micrococcus, den Hefen,
- 10⁵ bis 5x10⁶ Zellen von Debaryomyces,
- 10⁵ bis 5x10⁶ Zellen von Klyveromyces,
und den Schimmelpilzen,
- 5x10⁴ bis 5x10⁵ Zellen von P. roquefortii
oder jedes Mikroorganismus, der eine vergleichbare Aktivität wie eine/s/r dieser Bakterien, Hefen und Schimmelpilze besitzt.

6. Käse aus gekochter gepresster Masse, erhalten nach dem Verfahren gemäß Anspruch 1, **dadurch gekennzeichnet, dass** das Hinzufügen der Gruppe von Zellextrakten der Reifungsmikroorganismen einem Beitrag entspricht, pro Milliliter Milch, des Gehalts an:
den Bakterien,
- 10⁶ bis 5x10⁷ Zellen von Corynebacterium,
- 10⁶ bis 5x10⁷ Zellen von B. linens,
- 10⁶ bis 5x10⁷ Zellen von Arthrobacter,
- 10⁶ bis 5x10⁷ Zellen von Micrococcus,
- 10⁶ bis 5x10⁷ Zellen von Propionibacterium, und den Hefen,
- 10⁵ bis 5x10⁶ Zellen von Debaryomyces,
- 10⁵ bis 5x10⁶ Zellen von Klyveromyces,
oder jedes Mikroorganismus, der eine vergleichbare Aktivität wie eine/s dieser Bakterien und Hefen besitzt.

7. Trocken-Einsalz-Produkt, erhalten nach dem Verfahren gemäß Anspruch 1, **dadurch gekennzeichnet, dass** das Hinzufügen der Gruppe von Zellextrakten der Reifungsmikroorganismen einem Beitrag entspricht, pro Gramm Fleisch, des Gehalts an:
den Bakterien,
- 10⁶ bis 5x10⁷ Zellen von Staphylococcus,
- 10⁶ bis 5x10⁷ Zellen von Micrococcus, den Hefen,
- 10⁵ bis 5x10⁶ Zellen von Debaryomyces,
- 10⁵ bis 5x10⁶ Zellen von Klyveromyces,
und den Schimmelpilzen,
- 5x10⁴ bis 5x10⁵ Zellen von P. chrysogenum,
- 5x10⁴ bis 5x10⁵ Zellen von P. nalgiovensis,
oder jedes Mikroorganismus, der eine vergleichbare Aktivität wie eine/s/r dieser Bakterien, Hefen und Schimmelpilze besitzt.

8. Verfahren zur Herstellung eines fermentierten Nahrungsmittels gemäß Anspruch 1, **dadurch gekennzeichnet, dass** die Gruppe von Zellextrakten der Reifungsmikroorganismen kein Übermaß einer Fraktion einführt, das heißt 5 bis 50% des Volumens des Ausgangsmaterials, diese Fraktion wird anschließend, nach der beschleunigten Reifung, wieder eingeführt in den Rest des Ausgangsmaterials um einen aromatischen Beitrag zu liefern.

9. Verfahren zur Herstellung eines fermentierten Milchprodukts gemäß Anspruch 1, außerdem **gekennzeichnet durch** das Hinzufügen zu dem Ausgangsmaterial eines oder mehrerer Reifungsfaktoren, die von Enzymen, Milchsäurebakterien, ihrer Zellextrakte und von einer Gruppe ihrer Zellextrakte gebildet werden.

## Claims

1. Method for producing a fermented food product **characterized by** the addition to the raw material of a selection of cellular extracts from its ripening micro-organisms, these being naturally present or added by seeding, it being specified that:
the number of cells making up the volume of the extract from a micro-organism contained in this selection is 10 to 1000 times greater than that of the same micro-organism naturally present or added in a live form,
the proportion of each extract in the selection is approximately that of the corresponding micro-organism present in the ripening mixture.

2. Method for producing a fermented food product according to claim 1, **characterized in that** the extracts are obtained from micro-organisms chosen from:
GRAM+ bacteria:
Corynebacteriaceae family:
- genus Corynebacterium, species C. glutamicum
- genus Brevibacterium, species B. linens
- genus Arthrobacter, species A. globiformis
- genus Propionibacterium
Micrococcaceae family:
- genus Micrococcus
- genus Staphylococcus, species S. xylosus and S. carnosus
GRAM- bacteria
Enterobacteriaceae family:
- genus Hafnia, species H. alveï
- genus Enterococcus, species E. faecalis or E. faecium
Yeasts:
- genus Debaryomyces, species D. hansenii
- genus Saccharomyces, species S.cerivisiae
- genus Kluyveromyces, species K. lactis
- genus Geotrichum, species G. candidum
Moulds :
Filamentous fungi family:
- genus Penicillium, species P. candidum, P. chrysogenum, P. roquefortii and P. nalgiovensis.

3. Unboiled soft or pressed cheese with a bloom rind obtained according to the method of claim 1, **characterized in that** the addition of the selection of cellular extracts from the ripening micro-organisms corresponds to the addition, per millilitre of milk, of the contents of:
for bacteria,
- 10⁶ to 5.10⁷ cells of Corynebacterium,
- 10⁶ to 5.10⁷ cells of B.linens.
- 10⁶ to 5.10⁷ cells of Arthrobacter,
- 10⁶ to 5.10⁷ cells of Micrococcus,
for yeasts,
- 10⁵ to 5.10⁶ cells of Debaryomyces,
- 10⁵ to 5.10⁶ cells of Kluyveromyces,
- 10⁵ to 5.10⁶ cells of Geotrichum,
and for moulds,
- 5.10⁴ to 5.10⁵ cells of P. candidum
or of any micro-organism having an activity similar to that of one of these bacteria, yeasts and moulds.

4. Unboiled soft or pressed cheese with a washed rind obtained according to the method of claim 1, **characterized in that** the addition of the selection of cellular extracts from the ripening micro-organisms corresponds to the addition, per millilitre of milk, of the contents of:
for bacteria,
- 10⁶ to 5.10⁷ cells of Corynebacterium,
- 10⁶ to 5.10⁷ cells of B.linens,
- 10⁶ to 5.10⁷ cells of Arthrobacter,
- 10⁶ to 5.10⁷ cells of Micrococcus,
and for yeasts,
- 10⁵ to 5.10⁶ cells of Debaryomyces,
- 10 ⁵ to 5.10⁶ cells of Kluyveromyces,
or of any micro-organism having an activity similar to that of one of these bacteria and yeasts.

5. Veined cheese obtained according to the method of claim 1, **characterized in that** the addition of the selection of cellular extracts from ripening micro-organisms corresponds to the addition, per millilitre of milk, of the contents of:
for bacteria,
- 10⁶ to 5.10⁷ cells of Corynebacterium,
- 10⁶ to 5.10⁷ cells of B.linens,
- 10⁶ to 5.10⁷ cells of Arthrobacter,
- 10⁶ to 5.10⁷ cells of Micrococcus,
for yeasts,
- 10⁵ to 5.10⁶ cells of Debaryomyces,
- 10⁵ to 5.10⁶ cells of Kluyveromyces,
and for moulds,
- 5.10⁴ to 5.10⁵ cells of P. roquefortii
or of any micro-organism having an activity similar to that of one of these bacteria, yeasts or moulds.

6. Boiled pressed cheese obtained according to the method of claim 1, **characterized in that** the addition of the selection of cellular extracts from the ripening micro-organisms corresponds to the addition, per millilitre of milk, of the contents of:
for bacteria,
- 10⁶ to 5.10⁷ cells of Corynebacterium,
- 10⁶ to 5.10⁷ cells of B.linens,
- 10⁶ to 5.10⁷ cells of Arthrobacter,
- 10⁶ to 5.10⁷ cells of Micrococcus,
- 10⁶ to 5.10⁷ cells of Propionibacterium
and for yeasts,
- 10 ⁵ to 5.10⁶ cells of Debaryomyces,
- 10 ⁵ to 5.10⁶ cells of Kluyveromyces,
or of any micro-organism having an activity similar to that of one of these bacteria and yeasts.

7. Dry conditioning product obtained according to the method of claim 1, **characterized in that** the addition of the selection of cellular extracts of ripening micro-organisms corresponds to the addition, per milligram of meat, of the contents of:
for bacteria,
- 10⁶ to 5.10⁷ cells of Staphylococcus,
- 10⁶ to 5.10⁷ cells of Micrococcus,
for yeasts,
- 10⁵ to 5.10⁶ cells of Debaryomyces,
- 10⁵ to 5.10⁶ cells of Kluyveromyces,
and for moulds,
- 5.10⁴ to 5.10⁵ cells of P. chrysogenum
- 5.10⁴ to 5.10⁵ cells of P. nalgiovensis
or of any micro-organism having an activity similar to that of one of these bacteria, yeasts or moulds.

8. Method for producing a fermented food product according to claim 1, **characterized in that** the selection of cellular extracts from ripening micro-organisms is added in excess to only one fraction, namely 5 to 50 % of the volume of the raw material, this fraction then being, after accelerated ripening, re-introduced into the remainder of the raw material so as to provide a flavouring addition.

9. Method for producing a dairy product according to claim 1, additionally **characterized by** the addition to the raw material of one or more ripening factors consisting of enzymes, lactic bacteria, their cellular extracts or a selection of their cellular extracts.
